Europäisches Patentamt

European Patent Office

Office européen des brevets

(11) Veröffentlichungsnummer: **0 118 876 B1**

(12) **EUROPÄISCHE PATENTSCHRIFT**

(45) Veröffentlichungstag der Patentschrift: **10.11.93**

(51) Int. Cl.5: **B29C 67/20**, B29C 67/24

(21) Anmeldenummer: **84102436.7**

(22) Anmeldetag: **07.03.84**

Die Akte enthält technische Angaben, die nach dem Eingang der Anmeldung eingereicht wurden und die nicht in dieser Patentschrift enthalten sind.

(54) **Zellige Polyurethan-Formkörper, Verfahren zu deren Herstellung durch thermoplastische Verformung von Polyester-Polyurethan-Schaumstoffen sowie deren Verwendung.**

(30) Priorität: **15.03.83 DE 3309127**

(43) Veröffentlichungstag der Anmeldung:
**19.09.84 Patentblatt 84/38**

(45) Bekanntmachung des Hinweises auf die Patenterteilung:
**10.11.93 Patentblatt 93/45**

(84) Benannte Vertragsstaaten:
**DE FR GB IT NL SE**

(56) Entgegenhaltungen:
FR-A- 2 220 616        US-A- 3 050 432
US-A- 3 370 117        US-A- 3 400 196
US-A- 3 425 890        US-A- 3 740 283
US-A- 4 129 697

PLASTVERARBEITER, Band 32, Nr. 8, August 1981, Seiten 967-970, Speyer/Rhein, DE; R. ZÖLLNER et al.: "Thermisch verformbare PUR-Hartschaumstoffe, ein neuer Weg zur Herstellung von Formteilen"

(73) Patentinhaber: **BASF Aktiengesellschaft**
**Carl-Bosch-Strasse 38**
**D-67063 Ludwigshafen(DE)**

(72) Erfinder: **Grabhoefer, Herbert, Dr.**
**Bliesstrasse 4**
**D-6703 Limburgerhof(DE)**
Erfinder: **Volkert, Otto, Dr.**
**Im Eiertal 10**
**D-6719 Weisenheim(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.6/3.3.1)

EP 0 118 876 B1

EP 0 118 876 B1

**Beschreibung**

Die Verwendung von geformten Platten als Wandverkleidungen, Zwischendecken, Fahrzeugverkleidungen oder dergleichen ist bekannt.

Nach Angaben der DE-A-26 02 839 (US 4 059 660 und US 4 119 749) bestehen solche Platten aus einem Verbund von doppelseitig abgeschlossener Wellpappe, Klebstoff und einer Schaumstoffschicht, z.B. aus Polyurethan-Schaumstoff, wobei die einzelnen Schichten unter Druck bei Raumtemperatur gleichzeitig miteinander verbunden und geformt werden. Die Herstellung der Platten ist sehr arbeitsintensiv und für Großserien wenig geeignet.

Reversibel warmverformbare faserverstärkte harte Polyurethankunststoffe werden gemäß DE-A-21 64 381 (GB 1 411 958) hergestellt durch Einarbeiten von anorganischen oder organischen Fasern in ein bis 50°C flüssiges, noch nicht ausreagiertes Polyurethan-Reaktionsgemisch aus überwiegend bifunktionellen Polyolen mit Hydroxylzahlen von 100 bis 600 und modifizierten Polyisocyanaten oder polymeren Diphenylmethan-diisocyanaten. Nachteilig an diesem Zweistufenverfahren ist, daß zunächst Vliese und Gewebe mit dem fließfähigen Polyurethan-Reaktionsgemisch beschichtet und danach in einer geschlossenen Form bei Temperaturen über 120°C gehärtet werden müssen. Die auf diese Weise hergestellten Platten sind danach bei Temperaturen von 130 bis 220°C warmverformbar. Auch dieses kostenintensive Verfahren erlaubt nur die Herstellung von Formkörpern in kleiner Stückzahl pro Zeiteinheit.

Die DE-A-26 07 380 (US 4 129 697) beschreibt die Herstellung von warmverformbaren Polyisocyanuratschaumstoffen durch Umsetzung von Polyether-polyolen, Dialkoholen und Diphenylmethan-diisocyanat, das gegebenenfalls bis zu 20 Gew.% nahe verwandte Polyisocyanate höheren Molekulargewichts enthalten kann. Die Schaumbildung erfolgt in erhitzten Formen oder Bändern, wobei die Schaumstoffe eine Nachhärtung, z.B. 15 Minuten bei 80°C, erhalten. Nachteilig an diesem Verfahren ist u.a., daß die Polyisocyanurat-Schaumstoffe spröde sind, keine innere Dämpfung aufweisen und eine schlechte Schallabsorption zeigen. Ferner können Polrisocyanurat-Blockschaumstoffe mit Blockhöhen größer als 50 cm üblicherweise nicht hergestellt werden, da sich Schaumkernverfärbungen ergeben können.

Als Wandverkleidungen, Dachhimmel, Motorraumabdeckungen geeignete Flächengebilde mit Wandstärken von 1 bis 6 mm durch Formverschäumung anzufertigen, ist problematisch oder sogar unmöglich, weil sich hierbei sehr hohe Rohdichten ergeben würden. Ferner ist eine vollständige, gleichmäßige Füllung von Formen mit komplizierten Raumformen mit relativ hochviskosen Polyurethanmischungen äußerst schwierig und falls überhaupt, nur unter hohem Druck möglich.

Die Aufgabe der vorliegenden Erfindung bestand darin, zellige, vorzugsweise möglichst großflächige, selbsttragende Polyurethan-Formkörper mit geringem Raumgewicht in großen Stückzahlen kostengünstig herzustellen. Die Polyurethan-Formkörper sollten ein sehr gutes Rückstellvermögen bei Druckbeanspruchung, ein hohes Schallabsorptionsvermögen, gute Wärmedämmung und hohe Flammbeständigkeit aufweisen. Als Ausgangskomponenten geeignete Polyurethan-Blockschaumstoffe durften keine Kernverfärbungen oder -verbrennung zeigen.

Gegenstand der Erfindung ist ein mehrstufiges Verfahren zur Herstellung von zelligen Polyurethan-Formkörpern mit einer Dichte von bis zu 400 g/l durch thermoplastische Verformung von Polyurethan-Schaumstoffen bei einer erhöhten Temperatur unter Verdichtung, dadurch gekennzeichnet, daß man

(i) weiche, halbharte oder zähharte Polyurethan-Schaumstoffblöcke mit einer Dichte von 15 bis 40 g/l herstellt durch Umsetzung von

a) mindestens einem Polyester-polyol mit einer Funktionalität von 2,3 bis 6 und einer Hydroxylzahl von 45 bis 380 auf der Grundlage von Adipinsäure-Diethylenglykol-Glycerin, Mischungen aus Bernstein-, Glutar- und Adipinsäure-Diethylenglykol-Glycerin oder -Trimethylolpropan, Adipinsäure-Diethylenglykol-Trimethylolpropan, Adipinsäure-Phthalsäure-1,3-Propylenglykol-Trimethylolpropan, Adipinsäure-Phthalsäure-Ölsäure-Trimethylolpropan und/oder Adipinsäure-Glutarsäure-Bernsteinsäure-Diethylenglykol-Trimethylolpropan mit

b) gegebenenfalls mit Carbodiimid- und/oder Urethangruppen modifizierten Mischungen aus Diphenylmethan-diisocyanaten und Polyphenyl-polymethylen-polyisocyanaten mit einem Diphenylmethanisomerengehalt von 40 bis 85 Gew.-%

in Gegenwart von

c) Treibmitteln und

d) Katalysatoren sowie gegebenenfalls

e) Kettenverlängerungsmitteln oder Vernetzern und

f) Hilfsmitteln und/oder Zusatzstoffen,

(ii) die erhaltenen thermoplastisch verformbaren Polyurethan-Schaumstoffblöcke in Polyurethan-Schaumstoffplatten mit einer Dicke von 2 bis 200 mm spaltet und

2

(iii) diese bei einer Temperatur von 140 bis 200°C und unter Verdichtung mit ein: Verdichtungsgrad von 2 bis 10 thermoplastisch verformt.

Gegenstand der Erfindung sind auch zellige Polyurethan-Formkörper herstellbar nach diesem Verfahren.

Das erfindungsgemäße Verfahren stellt eine nützliche Ergänzung zur Formverschäumung dar und kann überall dort Anwendung finden, wo den konventionellen Methoden der Formteilherstellung Grenzen gesetzt sind. Nach diesem Verfahren können auch selbsttragende großflächige Formteile mit komplizierten Raumformen mit niedrigen Dichten konturengenau schnell in großen Stückzahlen hergestellt werden.

Zur erfindungsgemäßen Herstellung der zelligen Polyurethan-Formkörper werden aus den Aufbaukomponenten auf Basis von Polyester-polyolen, gegebenenfalls im Gemisch mit maximal 45 Gew.% Polyetherpolyolen, bezogen auf das Gesamtgewicht, und Mischungen aus Diphenylmethan-diisocyanaten und Polyphenyl-polymethylen-polyisocyanaten - im folgenden kurz roh-MDI genannt - kontinuierlich auf üblichen Blockschaumanlagen oder diskontinuierlich in offenen Formen weiche, halbharte oder zähharte Polyurethan-Blockschaumstoffe mit Dichten von 15 bis 40 g/l, vorzugsweise 20 bis 38 g/l hergestellt, die thermoplastisch verformbar sind und die gewünschten mechanischen Eigenschaften, wie z.B. Dämpfung, Rückstellvermögen, Hydrolysebeständigkeit, und Schallabsorptionsvermögen besitzen.

Aus den erhaltenen Polyurethan-Schaumstoffblöcken, die Größen bis zu 60 x 2 x 1 m erreichen können, werden, falls erforderlich, entsprechend den herzustellenden Formkörpern dimensionierte Schaumstoffblöcke geschnitten, die möglichst abfall- und staubfrei in Schaumstoffplatten mit einer Dicke von 2 mm bis 20 cm, vorzugsweise 2 mm bis 10 cm und insbesondere 5 mm bis 25 mm gespalten werden. Hierzu geeignet sind alle technisch üblichen Spaltvorrichtungen, wobei in der Praxis vorzugsweise Oszillator-Heißdrahtschneidgatter verwendet werden. Beachtet werden muß hierbei lediglich, daß die vorzugweise großformatigen Schaumstoffplatten eine genügend hohe mechanische Stabilität besitzen, um beispielsweise auch Transporte schadenfrei zu überstehen.

Zur Herstellung der erfindungsgemäßen Polyurethan-Formkörper werden die Schaumstoffplatten, die, wie bereits dargelegt, Dichten von 15 bis 40 g/l, vorzugsweise von 20 bis 38 g/l besitzen, bei Temperaturen von 140 bis 200°C, vorzugsweise 150 bis 180°C und unter Verdichtung mit einem Verdichtungsgrad von 2 bis 10, in Form- oder Prägewerkzeugen thermoplastisch verformt. Zur Herstellung von erfindungsgemäßen Polyurethan-Formkörpern mit einem zelligen Schaumstoffkern und einer Randzone höherer Dichte müssen höhere Verdichtungsgrade angewandt werden. Geeignet sind Verdichtungsgrade von größer als 2, insbesondere von 3 bis 8. Der Verdichtungsgrad wird gemäß der Erfindung entsprechend der Verschäumung in geschlossenen Formen definiert als der Quotient aus der Dichte des hergestellten zelligen Polyurethan-Formkörpers und der Dichte des eingesetzten Polyurethan-Schaumstoffs. Ein Verdichtungsgrad von z.B. 6 bedeutet somit, daß eine Schaumstoffplatte der Dichte 20 g/l zu einem Formkörper der Dichte 120 g/l verpreßt wird.

Die thermoplastische Verformung der Polyurethan-Schaumstoffplatten bei 140 bis 200°C kann nach verschiedenen Verfahren durchgeführt werden.

Nach einer Verfahrensvariante werden die Polyurethan-Schaumstoffplatten auf die Verformungstemperatur erwärmt mit Hilfe von z.B. IR-Strahlern, Heizluftöfen oder Kontaktheizplatten. Die aufgeheizten Schaumstoffplatten werden in das Raumtemperatur aufweisende oder mäßig erwärmte, beispielsweise bis 60°C warme Formwerkzeug eingebracht und drucklos (Verdichtungsgrad 1) oder vorzugsweise unter Druck verformt. Vorteilhaft an dieser Methode ist, daß die Formwerkzeuge aus preisgünstigen Materialien, wie Stein, Gips, Holz oder Kunststoffen, z.B. UP- oder Epoxidharzen, hergestellt und die erhaltenen Formkörper sofort entformt werden können.

Nach der vorzugsweise zur Anwendung kommenden Verfahrensweise werden die mäßig erwärmten oder vorzugsweise Raumtemperatur aufweisenden Polyurethan-Schaumstoffplatten in auf 140 bis 200°C erwärmte, temperierbare Formwerkzeuge aus Metall, beispielsweise Stahl oder Gußaluminium, eingelegt, in einem Zeitraum von 30 bis 300 Sekunden, vorzugsweise 30 bis 120 Sekunden unter Druck verformt und danach der erhaltene zellige Polyurethan-Formkörper entformt.

Selbstverständlich ist auch möglich, beide Verfahrensweisen miteinander zu kombinieren und auf 140 bis 200°C erwärmte Schaumstoffplatten in 140 bis 200°C heißen Formwerkzeugen äußerst rasch thermoplastisch zu verformen.

Die erfindungsgemäßen Polyurethan-Formkörper, insbesondere solche mit einem zelligen Kern geringer Dichte und einer Randzone höherer Dichte, können direkt industriell, z.B. als Schallschutzisolation oder Motorraumabdeckung verwertet werden.

Sofern es gewünscht wird, können die Schaumstoffplatten jedoch in den Formwerkzeugen gleichzeitig mit der thermoplastischen Verformung zusätzlich ein- oder beidseitig mit Versteifungs- oder Dekormaterial versehen werden. Hierzu werden die genannten Materialien in das Formwerkzeug eingelegt und mit Hilfe von Sprüh-, Kaschier- oder Schmelzkleber unter Druck mit dem Polyurethan-Schaumstoff verbunden. Bemerkenswert hierbei ist, daß Holz oder mit Holzmehl gefülltes Polypropylen auch ohne Klebstoffzusatz eine hohe Verbundfestigkeit mit dem Polyurethan-Schaumstoff auf Polyesterbasis ergibt.

Als Versteifungsmaterialien oder nicht- oder direkt eingefärbte oder bedruckte Dekormaterialien seien beispielhaft genannt Gewebe oder Vliese aus Glas-, Kohle-, Kunststoff- oder Textilfasern, Folien aus Metall, wie z.B. Aluminium, Kupfer, Messing, Gold oder Stahlblech bis 0,3 mm Dicke, Polyvinylchlorid, Acrylnitril-Butadien-Styrol-polymerisaten, Polyamid, Polyester, Polyethylen, Polypropylen, holzmehlgefülltem Polypropylen, Celluloseestern und -mischestern, Karton oder Papierbahnen.

Bei einer bevorzugten Ausführungsform der Erfindung bestehen die Deckschichten aus eingedickten Prepregs aus ungesättigten Polyesterharzen, die beim Verpressen bei 140 bis 200 °C ausgehärtet werden. Die Prepregs sind vorzugsweise 1 bis 5 mm dick und enthalten neben dem ungesättigten Polyesterharz übliche Monomere, z.B. Styrol, Verstärkungsmittel, z.B. Glasfasern, Füllstoffe, z.B. Kreide, Eindickmittel, z.B. Magnesiumoxid, gegebenenfalls polymere Zusätze, z.B. Dienkautschuke, sowie übliche Inhibitoren, Peroxide und Entformungshilfsmittel.

Die erfindungsgemäß hergestellten zelligen Polyurethan-Formkörper werden ausschließlich aus thermoplastisch verformbaren, weichen, halbharten oder zähharten Polyurethan-Schaumstoffen auf Basis von Polyester-polyolen oder Gemischen aus Polyester- und Polyether-polyolen und gegebenenfalls modifiziertem roh-MDI hergestellt, wobei die halbharten Einstellungen aufgrund ihres hervorragenden Dämpfungs- und Rückstellvermögens bevorzugt Anwendung finden.

Als Aufbaukomponente für die erfindungsgemäß verwendbaren Polyurethan-Schaumstoffe eignen sich Polyester-polyole mit einer Funktionalität von 2,3 bis 6, vorzugsweise von 2,3 bis 4,0 und Hydroxylzahlen von 45 bis 380, vorzugsweise von 50 bis 220, wobei zur Herstellung von weichen Schaumstoffen Hydroxylzahlen von 50 bis 80, von halbharten Schaumstoffen Hydroxylzahlen von 85 bis 150 und von zähharten Schaumstoffen Hydroxylzahlen von 150 bis 380 insbesondere bevorzugt sind.

Die Polyester-polyole können hergestellt werden nach bekannten Methoden, beispielsweise durch Polykondensation bei Temperaturen von 100 bis 250 °C, vorzugsweise 130 bis 220 °C, gegebenenfalls in Gegenwart von an sich bekannten Veresterungskatalysatoren, wie organischen Verbindungen von Titan, Vanadium oder Zinn und/oder inerten Lösungsmitteln oder Wasserschleppmitteln, wie Benzol, Toluol, Xylol oder Chlorbenzol zur azeotropen Destillation des Kondenswassers, bevorzugt unter vermindertem Druck in der Endphase der Polykondensation, aus Dicarbonsäuren, vorzugsweise aliphatischen Dicarbonsäuren mit 4 bis 6 Kohlenstoffatomen im Alkylenrest, und mehrwertigen Alkoholen, vorzugsweise Diolen. Genannt seien beispielhaft aliphatische Dicarbonsäuren, wie Glutarsäure, Pimelinsäure, Sebacinsäure und vorzugsweise Adipinsäure und Mischungen aus Bernstein-, Glutar- und Adipinsäure in den Gewichtsverhältnissen 20 bis 35:35 bis 50:20 bis 32 und aromatische Dicarbonsäuren, wie Phthalsäure. Mitverwendet werden können ferner in untergeordneten Mengen höhermolekulare Monocarbonsäuren, wie z.B. Ölsäure. Beispiele für zwei- und mehrwertige, insbesondere zweiwertige Alkohole sind: Ethylenglykol, Diethylenglykol, 1,3-Propylenglykol, Dipropylenglykol, 1,4-Butylenglykol, 1,5-Pentamethylenglykol, 1,6-Hexamethylenglykol, Glycerin und Trimethylolpropan, wobei Diethylenglykol, 1,3-Propylenglykol, Mischungen aus 1,4-Butylenglykol, 1,5-Pentamethylenglykol und 1,6-Hexamethylenglykol in den Gewichtsverhältnissen 10 bis 30:40 bis 60:15 bis 35, Glycerin und Trimethylolpropan bevorzugt sind. Erfindungsgemäß verwendet werden Polyester-polyole auf Basis von Adipinsäure-Diethylenglykol-Glyerin, Mischungen aus Bernstein-, Glutar- und Adipinsäure-Diethylenglykol-Glycerin oder Trimethylolpropan und insbesondere Polyester-polyole, hergestellt aus Adipinsäure-Diethylenglykol-Trimethylolpropan, Adipinsäure-Phthalsäure-1, 3-Propylenglykol-Trimethylolpropan, Adipinsäure-Phthalsäure-ölsäure-Trimethylolpropan und Adipinsäure-Glutarsäure-Bernsteinsäure-Diethylenglykol und Trimethylolpropan. Die Polyester-polyole können einzeln oder in Form von Mischungen eingesetzt werden. Vorzugsweise Anwendung finden Mischungen aus

20 bis 85, vorzugsweise 20 bis 60 Gewichtsteilen eines Polyester-polyols aus Adipinsäure-Diethylenglykol-Trimethylolpropen,

10 bis 80, vorzugsweise 10 bis 30 Gewichtsteilen eines Polyester-polyols aus Adipinsäure-Phthalsäure-1, 3-Propylenglykol-Trimethylolpropan und/oder

5 bis 80, vorzugsweise 5 bis 30 Gewichtsteilen eines Polyester-polyols aus Adipinsäure-Phthalsdäure-ölsäure-Trimethylolpropan

oder Mischungen aus

50 bis 95, vorzugsweise 60 bis 90 Gewichtsteilen eines Polyester-polyols aus Adipinsäure-Diethylenglykol-Trimethylolpropan und

5 bis 50, vorzugsweise 10 bis 40 Gewichtsteilen eines Polyester-polyols aus Adipinsäure-Glutarsäure-Bernsteinsäure-Diethylenglykol-Trimethylolpropan.

Die erfindungsgemäß verwendbaren Polyester-polyole besitzen Viskositäten von ungefähr 6000 bis 30000, vorzugsweise 10.000 bis 25.000 m.Pa.s bei 25°C.

Zur Herstellung von Polyurethan-Schaumstoffen mit speziellen mechanischen Eigenschaften können die Polyester-polyole auch mit untergeordneten Mengen an üblichen Polyether-polyolen gemischt werden. Geeignet sind Polyester-polyether-polyolmischungen, die zu mindestens 55 Gew.%, vorzugsweise 60 bis nahezu 100 Gew.%, bezogen auf das Gesamtgewicht aus Polyester-polyolen bestehen.

Als aromatische Polyisocyanate werden Mischungen aus Diphenylmethan-diisocyanaten und Polyphenyl-polymethylen-polyisocyanaten (roh-MDI) mit einem Diphenylmethan-diisocyanat-Isomerengehalt von 40 bis 85 Gew.%, vorzugsweise von 40 bis 65 Gew.% und insbesondere von 40 bis 55 Gew.%, verwendet. Geeignet sind außerdem Carbodiimidgruppen und/oder vorzugsweise Urethangruppen enthaltende roh-MDI Modifikationen. Außerdem kann es für besondere Anwendungsgebiete zweckmäßig sein, dem roh-MDI untergeordnete Mengen, beispielsweise bis maximal 10 Gew.%, gegebenenfalls carbodiimid- und/oder urethanmodifiziertes 4,4'- und/oder 2,4'-Diphenylmethan-diisocyanat einzuverleiben.

Die thermoplastisch verformbaren Polyurethan-Schaumstoffe in Blockform werden vorzugsweise ohne die Mitverwendung von Kettenverlängerungsmitteln oder Vernetzern hergestellt. Je nach gewünschten mechanischen Eigenschaften der Polyurethan-Schaumstoffe kann jedoch der Zusatz von Kettenverlängerungsmittel oder Vernetzern mit Molekulargewichten von vorzugsweise 60 bis 300 zu vorteilhaften Ergebnissen führen. Geeignet hierfür sind aliphatische Diole mit 2 bis 6 Kohlenstoffatomen, wie z.B. Ethylen-, 1,4-Butylen- und 1, 6-Hexamethylenglykol, Triole wie z.B. Glycerin und Trimethylolpropan, Alkanolamine, wie Ethanolamin, Dialkanolamine, wie Diethanolamin und Trialkanolamine, wie Triethanolamin und Triisopropanolamin, wobei insbesondere die Mitverwendung von Triisopropanolamin bevorzugt ist. Das Gewichtsverhältnis von Polyester-polylol zu Kettenverlängerungsmittel oder Vernetzer ist abhängig von den gewünschten mechanischen Eigenschaften des Endprodukts und kann in den Grenzen von 0 bis 10 Gew.%, vorzugsweise 0 bis 5 Gew.%, bezogen auf das Polyester-polyolgewicht, variiert werden.

Zu den Treibmitteln, welche zur Herstellung der Polyurethan-Schaumstoffe verwendet werden, gehört Wasser, das mit Isocyanatgruppen unter Bildung von Kohlendioxid reagiert. Die Wassermengen, die zweckmäßigerweise eingesetzt werden, betragen 0,01 bis 5 Gew.%, vorzugsweise 2 bis 4 Gew.%, bezogen auf das Polyester-polyolgewicht.

Andere verwendbare Treibmittel, die gegebenenfalls zusätzlich mitverwendet werden, sind niedrigsiedende Flüssigkeiten, die unter dem Einfluß der exothermen Polyadditionsreaktion verdampfen. Geeignet sind Flüssigkeiten, welche gegenüber den organischen Polyisocyanaten inert sind und Siedepunkte von nicht über 100°C bei Atmosphärendruck, vorzugsweise zwischen -40 und +50°C aufweisen. Beispiele derartiger, vorzugsweise verwendeter Flüssigkeiten sind halogenierte Kohlenwasserstoffe, wie Methylenchlorid, Trichlorfluormethan, Dichlordifluormethan, Dichlormonofluormethan, Dichlortetrafluorethan und 1, 1, 2-Trichlor-1,2,2-trifluorethan. Auch Gemische dieser niedrigsiedenden Flüssigkeiten untereinander und/oder mit anderen substituierten oder unsubstituierten Kohlenwasserstoffen können verwendet werden.

Die zweckmäßigste Menge an niedrigsiedender Flüssigkeit zur Herstellung der Polyurethan-Schaumstoffe hängt ab von der Dichte, die man errreichen will, sowie von der verwendeten Wassermenge. Im allgemeinen liefern Mengen von 0,1 bis 20 Gew.%, vorzugsweise 5 bis 15 Gew.%, bezogen auf das Gewicht des Polyester-polyols, gute Ergebnisse.

Vorzugsweise als Treibmittel verwendet werden Mischungen aus Wasser und Trichlorfluormethan.

Dem schaumfähigen Reaktionsgemisch können ferner Katalysatoren, die die Polyurethanbildung beschleunigen, und gegebenenfalls Hilfs- und Zusatzstoffe, wie sie üblicherweise zur Herstellung von Polyurethan-Schaumstoffen Anwendung finden, einverleibt werden. In Betracht kommen beispielsweise oberflächenaktive Stoffe, Flammschutzmittel, Verstärkungsmittel, Porenregler, Antioxidationsmittel, Hydroxylenschutzmittel, Farbstoffe, Pigmente, Füllstoffe und andere Zusätze.

Geeignete Katalysatoren zur Beschleunigung der Umsetzung zwischen den Polyester-polyolen, gegebenenfalls Kettenverlängerungsmitteln, Wasser und den organischen Polyisocyanaten sind beispielsweise tertiäre Amine, wie Dimethylbenzylamin, N,N,N',N'-Tetramethyl-diamino-ethylether, Bis-(dimethylaminopropyl)-harnstoff, N-Methyl- bzw. N-Ethylmorpholin, Dimethylpiperazin, 1,2-Dimethylimidazol, 1-Aza-bicyclo-(3,3,0)-octan und vorzugsweise Triethylendiamin und 2-(Dimethylaminoethoxi)-ethanol, die in Mengen von 0,1 bis 30 Gew.%, vorzugsweise von 0,5 bis 25 Gew.%, bezogen auf das Polyester-polyolgewicht verwendet werden.

In Betracht kommen ferner beispielsweise oberflächenaktive Substanzen, welche zur Unterstützung der Homogenisierung der Ausgangsstoffe dienen und gegebenenfalls auch geeignet sind, die Zellstruktur der Polyurethan-Schaumstoffe zu regulieren. Genannt seien beispielhaft Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester und Türkischrotöl, die in Mengen von 0,2 bis 6 Gewichtsteilen pro 100 Gewichtsteilen Polyester-polyol angewandt werden.

Zur Verbesserung der Flammbeständigkeit können den Polyurethan-BlockschaumstoffenFlammschutzmittel einverleibt werden. Genannt seien beispielsweise Phosphor- und/oder Halogenatome enthaltende Verbindungen, wie Trikresylphosphat, Tris-2-chlorethylphosphat, Tris-chlorpropylphosphat und Tris-2,3-dibrompropylenphosphat, anorganische Flammschutzmittel, wie Antimontrioxid, Arsenoxid, Ammoniumphosphat, Ammoniumpolyphosphate und Ammoniumsulfat sowie Cyansäurederivate, wie Dicyandiamid, Guanidin, Guanidinsalze und Melamin. Im allgemeinen hat es sich als vorteilhaft erwiesen, 5 bis 50 Gewichtsteile der genannten Flammschutzmittel für jeweils 100 Gew.-Teile der Polyesterpolyole zu verwenden.

Als Verstärkungsmittel seien beispielhaft Kohlefasern, Glaskugeln und vorzugsweise Glasfasern und Glasfaserpulver genannt, die in Mengen bis zu 25 Gew.%, bezogen auf das Polyester-polyolgewicht, in die schaumfähige Polyurethanmischung einverleibt werden können.

Nähere Angaben über die oben genannten anderen üblichen Hilfs- und Zusatzstoffe sind der Fachliteratur, beispielsweise der Monographie von J.H. Saunders und K.C. Frisch "High Polymers", Band XVI, Polyurethanes, Teil 1 und 2, Verlag Interscience Publishers 1962 bzw. 1964 zu entnehmen.

Zur Herstellung der Polyurethan-Blockschaumstoffe werden die organischen Polyisocyanate und Polyester-polyole bzw. Mischungen aus Polyester-polyolen und gegebenenfalls Polyether-polyolen und/oder Kettenverlängerungsmitteln in solchen Mengen zur Umsetzung gebracht, daß das Verhältnis von OH-:NCO-Gruppen 1:0,7 bis 1,3, vorzugsweise 1:0,8 bis 1,1 beträgt, wobei zur Herstellung von weichen Polyurethan-Schaumstoffen OH-:NCO-Gruppenverhältnisse von 1:0,8 bis 0,95, für halbharte Polyurethan-Schaumstoffe OH-:NCO-Gruppenverhältnisse von 1:0,95 bis 1,05 und für zähharte Polyurethan-Schaumstoffe OH-:NCO-Gruppenverhältnisse von 1:1,05 bis 1,1 bevorzugt Anwendung finden.

Die Polyurethan-Schaumstoffe werden vorzugsweise nach dem one shot-Verfahren in Form von großen Schaumstoffblöcken kontinuierlich in Blockschaumanlagen oder diskontinuierlich in offenen Schaumstoff-Formen hergestellt. Bei Verwendung einer Mischkammer mit mehreren Zulaufdüsen können die Ausgangskomponenten einzeln zugeführt und in der Mischkammer intensiv vermischt werden. Als besonders vorteilhaft hat es sich erwiesen, ein 3 Komponentensystem zu verarbeiten, wobei als Komponente A die Polyester-polyole oder Mischungen aus Polyester-polyolen, Polyether-polyolen und/ oder Diolen, als Komponente B das gegebenenfalls modifizierte roh-MDI und als Komponente C ein Premix aus Treibmitteln, Katalysatoren sowie gegebenenfalls Kettenverlängerungsmitteln oder Vernetzern, Hilfsmitteln und/oder Zusatzstoffen verwendet werden. Hierbei kann es in Abhängigkeit von den eingesetzten Aufbaukomponenten zweckmäßig sein, der Komponente C als Lösungsvermittler ein niedrigviskoses Polyether-polyol mit einer Funktionalität von 2 bis 3 und einer Hydroxylzahl von 30 bis 85 in einer Menge bis maximal 45 Gew.%, bezogen auf das Gesamtgewicht von Treibmittel, Katalysator sowie gegebenenfalls Kettenverlängerungsmittel, Hilfsmittel und Zusatzstoff hinzuzufügen.

Zur Herstellung der Polyurethan-Blockschaumstoffe werden die beschriebenen Ausgangsstoffe in den genannten Mengenverhältnissen intensiv bei Temperaturen von 15 bis 60°C, vorzugsweise 20 bis 35°C, gemischt und danach die Reaktionsmischung in offenen, gegebenenfalls temperierten Formen aufschäumen gelassen.

Die erhaltenen thermoplastisch verformbaren Polyurethan-Schaumstoffe mit Raumgewichten von 15 bis 40 g/l besitzen je nach Wahl des Polyester-polyols und der OH-:NCO-Äquivalenzverhältnisse eine sehr gute Hydrolysebeständigkeit, gute Stanzbarkeit, ein herausragendes Dämpfungs- und Rückstellvermögen und ein sehr gutes Wärmeisolations- und Schallabsorptionsvermögen.

Die daraus hergestellten erfindungsgemäßen zelligen Polyurethan-Formkörper besitzen Dichten von 15 bis 400 g/l, vorzugsweise 20 bis 80 g/l, wobei insbesondere die niedrigdichten Formkörper, beispielsweise mit Dichten bis 40 g/l, eine große technische Bedeutung zur Erhöhung der "inneren Sicherheit" im Automobil- und Flugzeugbau besitzen. Die Polyurethan-Formkörper finden vorzugsweise Verwendung in der Schienenfahrzeug-, Kraftfahrzeug- und Flugzeugindustrie als Dachhimmel, Türen- und Wandverkleidungen, Armaturentafeln, -bretter und Motorraumabdeckungen. Die Produkte werden jedoch auch in der Möbelindustrie, der Phono- und Fernsehtechnik und der Bauindustrie als Verkleidungen, zur Schallabsorption oder Wärmeisolierung verwendet.

Zur Herstellung der wärmeformbaren Polyurethan-Schaumstoffe fanden folgende Polyester- und Polyether-polyole Verwendung:

Polyester-polyol I:

Polyester-polyol mit einer Funktionalität von 2,6 und einer Hydroxylzahl von 60, hergestellt durch Polykondensation von Adipinsäure mit Diethylenglykol und Trimethylolpropan.

Polyester-Polyol II:

Polyester-polyol mit einer Funktionalität von 3,0 und einer Hydroxylzahl von 215, hergestellt durch Polykondensation von Adipinsäure, Phthalsäureanhydrid, 1,3-Propylenglykol und Trimethylolpropan.

Polyester-polyol III:

Polyester-polyol mit einer Funktionalität von 3,8 und einer Hydroxylzahl von 350, hergestellt durch Polykondensation von Adipinsäure, Phthalsäureanhydrid, Ölsäure und Trimethylolpropan.

Polyester-polyol IV:

Polyester-polyol mit einer Funktionalität von 2,6 und einer Hydroxylzahl von 63, hergestellt durch Polykondensation einer Dicarbonsäuremischung aus 50 Gew.-Teilen Adipinsäure, 30 Gew.-Teilen Glutarsäure und 20 Gew.-Teilen Bernsteinsäure mit Diethylenglykol und Trimethylolpropan.

Polyether-polyol I:

Trifunktionelles Polyether-polyol mit einer Hydroxylzahl von 35, hergestellt aus Glycerin als Startermolekül und 1,2-Propylenoxid und Ethylenoxid im Gewichtsverhältnis 85:15.

Polyether-polyol II:

Tetrafunktionelles Polyether-polyol mit einer Hydroxylzahl von 480, hergestellt aus Ethylendiamin als Startermolekül und 1,2-Propylenoxid.

roh-MDI:

Abkürzung für eine Mischung aus ungefähr 50 Gew.-Teilen Diphenylmethan-diisocyanaten und 50 Gew.-Teilen Polyphenyl-polymethylen-polyisocyanaten.

Beispiel 1

Herstellung eines halbharten, wärmeformbaren Polyurethan-Blockschaumstoffes aus folgenden Ausgangskomponenten:

```
40    Gew.-Teilen Polyester-polyol I,
20     "       "          "        "    II,
10     "       "          "        "    III,
30     "       "       Polyether-polyol I,
 3,2   "       "       Triisopropanolamin,
 1,7   "       "       N,N-Dimethylbenzylamin,
 4,0   "       "       Wasser und
97,8   "       "       roh-MDI.
```

Die Ausgangskomponenten wurden nach dem one shot-Verfahren in einem Mehrkomponentenmischkopf bei Raumtemperatur (23°C) intensiv vermischt und auf einer kontinuierlichen Polyurethan-Blockschaumanlage aufschäumen gelassen.

An dem erhaltenen Polyurethan-Schaumstoff wurden die folgenden mechanischen Eigenschaften gemessen:

7

| Raumgewicht nach DIN 53 420 | 38 kg/m$^3$ |
|---|---|
| Wärmebiegefestigkeit nach DIN 53 424 | 134 °C |
| Druckfestigkeit nach DIN 53 421 | 80 KPa |
| Biegefestigkeit nach DIN 53 423 | 170 KPa |
| Zugfestigkeit nach DIN 53 455 | 161 N/mm$^2$ |
| Bruchdehnung nach DIN 53 455 | 17 % |

Beispiel 2

Herstellung eines weichen, wärmeformbaren Polyurethan-Blockschaumstoffes aus folgenden Ausgangskomponenten:

```
80    Gew.-Teilen Polyester-polyol I,
20     "       "          "         "    IV
 1,2   "       "    N,N-Dimethyl-benzylamin,
 1,2   "       "    Schaumstabilisator auf Polyether-
                    -polysiloxanbasis ((R)Niax L 532
                    der Union Carbide Corp.),
 4,9   "       "    Wasser
20,0   "       "    Monofluortrichlormethan und
62,4   "       "    roh-MDI.
```

Die Ausgangskomponenten wurden analog den Angaben von Beispiel 1 zu einem Polyurethan-Blockschaumstoff verschäumt, an dem folgende mechanische Eigenschaften gemessen wurden:

| Raumgewicht nach DIN 53 420 | 20 kg/m$^3$ |
|---|---|
| Zugfestigkeit nach DIN 53 571 | 114 N/mm$^2$ |
| Bruchdehnung nach DIN 53 571 | 68 % |
| Stauchhärte bei 40 % Stauchung nach DIN 53 577 | 3,5 k.Pa |

Beispiel 3

Herstellung eines zähharten, flammgeschützten, wärmeformbaren Polyurethan-Blockschaumstoffes aus folgenden Ausgangskomponenten:

```
40    Gew.-Teilen Polyester-polyol I,
20     "       "          "         "    II
10     "       "          "         "    III,
10     "       "    Polyether-polyol II,
20     "       "    Ammoniumpolyphosphat,
10     "       "    Trichlorethylphosphat,
 3,2   "       "    Triisopropanolamin,
```

8

```
1,2  "    "   Dimethylbenzylamin,
4,0  "    "   Wasser und
98,4 "    "   roh-MDI.
```

Die Ausgangskomponenten wurden analog den Angaben von Beispiel 1 zu einem Polyurethan-Blockschaumstoff verschäumt, an dem folgende mechanische Eigenschaften gemessen wurden:

| | |
|---|---|
| Raumgewicht nach DIN 53 420 | 40 kg/m$^3$ |
| Wärmebiegefestigkeit nach DIN 53 424 | 138°C |
| Druckfestigkeit nach DIN 53 421 | 140 kPa |
| Biegefestigkeit nach DIN 53 423 | 231 kPa |
| Grenzbiegespannung nach DIN 53 423 | 229 kPa |
| Zugfestigkeit nach DIN 53 455 | 202 N/mm$^2$ |
| Bruchdehnung nach DIN 53 455 | 13 % |

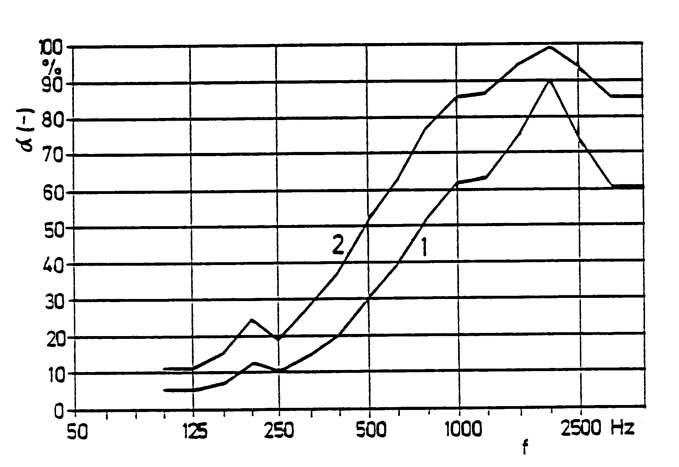

Der Polyurethan-Blockschaumstoff erfüllte die Flammschutzanforderungen
nach DIN 4201: B 2
nach FAR 25.853 (a bis l)
nach UL 94 HF 1 und
nach MVSS 302
Der Schallabsorptionsgrad $\alpha$ (-) zeigte in Abhängigkeit von der Frequenz f für eine Schaumstoffplatte der Dichte 40 kg/m$^3$ und Dicke 17 mm im Impedanzrohr den in der Figur gezeichneten Kurvenverlauf, wobei die Kurve 1 bei senkrechtem und die Kurve 2 bei statistischem Schalleinfall gemessen wurde.

Beispiel 4

Der Polyurethan-Blockschaumstoff, hergestellt gemäß Beispiel 3, wurde in 20 mm dicke Schaumstoffplatten geschnitten. Diese wurden schwach erwärmt und in einem Formwerkzeug bei 180°C und einem Druck von 1,5 bar auf eine Plattendicke von 10 mm verpreßt.
An den erhaltenen Formkörpern wurden folgende mechanischen Eigenschaften gemessen:

| | |
|---|---|
| Raumgewicht nach DIN 53 420 | 80 kg/m$^3$ |
| Grenzbiegespannung nach DIN 53 423 | 376 k.Pa |
| Wärmebiegefestigkeit nach DIN 53 424 | 138°C |
| Zugfestigkeit nach DIN 53 455 | 302 N/mm$^2$ |
| Bruchdehnung nach DIN 53 455 | 16 % |

Beispiel 5

Eine Polyurethan-Schaumstoffplatte von 10 mm Dicke, hergestellt aus dem Polyurethan-Blockschaumstoff nach Beispiel 2, wurde erwärmt, mit einem 2 mm dicken Prepreg aus einem ungesättigten Polyesterharz beschichtet und in einem Formwerkzeug bei 150° verformt.
Der erhaltene zellige Verbund-Formkörper wurde als Motorraumabdeckplatte im Automobilbau eingesetzt.

**Patentansprüche**

1. Mehrstufiges verfahren zur Herstellung von zelligen Polyurethan-Formkörpern mit einer Dichte von bis zu 400 g/l durch thermoplastische verformung von Polyurethan-Schaumstoffen bei einer erhöhten Temperatur unter Verdichtung, dadurch gekennzeichnet, daß man
   (i) weiche, halbharte oder zähharte Polyurethan-Schaumstoffblöcke mit einer Dichte von 15 bis 40 g/l herstellt durch Umsetzung von

a) mindestens einem Polyester-polyol mit einer Funktionalität von 2,3 bis 6 und einer Hydroxylzahl von 45 bis 380 auf der Grundlage von Adipinsäure-Diethylenglykol-Glycerin, Mischungen aus Bernstein-, Glutar- und Adipinsäure-Diethylenglykol-Glycerin oder -Trimethylolpropan, Adipinsäure-Diethylenglykol-Trimethylolpropan, Adipinsäure-Phthalsäure-1,3-Propylenglykol-Trimethylolpropan, Adipinsaure-Phthalsäure-Ölsäure-Trimethylolpropan und/oder Adipinsaure-Glutarsäure-Bernsteinsäure-Diethylenglykol-Trimethylolpropan mit

b) gegebenenfalls mit Carbodiimid- und/oder Urethangruppen modifizierten Mischungen aus Diphenylmethan-diisocyanaten und Polyphenyl-polymethylen-polyisocyanaten mit einem Diphenylmethanisomerengehalt von 40 bis 85 Gew.-%

in Gegenwart von

c) Treibmitteln und

d) Katalysatoren sowie gegebenenfalls

e) Kettenverlängerungsmitteln oder vernetzern und

f) Hilfsmitteln und/oder Zusatzstoffen,

(ii) die erhaltenen thermoplastisch verformbaren Polyurethan-Schaumstoffblöcke in Polyurethan-Schaumstoffplatten mit einer Dicke von 2 bis 200 mm spaltet und

(iii) diese bei einer Temperatur von 140 bis 200 °C und unter Verdichtung mit einem Verdichtungsgrad von 2 bis 10 thermoplastisch verformt.

2. Verfahren nach Anspruch 1, dadurch gekennzeichnet, daß man die thermoplastische Verformung (iii) in einem auf 140 bis 200 °C erwärmten Formwerkzeug durchführt und die Polyurethan-Schaumstoffplatten hierbei gleichzeitig ein- oder beidseitig mit Deckschichten versieht.

3. Verfahren nach den Ansprüchen 1 und 2, dadurch gekennzeichnet, daß die Deckschichten aus eingedickten Glasfasern und Füllstoffe enthaltenden, härtbaren ungesättigten Polyesterharz-Prepregs bestehen.

4. Zellige, thermoplastische Polyurethan-Formkörper mit einer Dichte bis zu 400 g/l, hergestellt nach einem Verfahren gemäß der Ansprüche 1 bis 3.

5. Verwendung von zelligen, thermoplastischen Polkyurethan-Formkörpern, hergestellt nach einem Verfahren gemäß den Ansprüchen 1 bis 3, als selbsttragende Wandverkleidungen, Dachhimmel, Motorraumabdeckung oder Armaturentafel in der Schienenfahrzeug-, Kraftfahrzeug- oder Flugzeugindustrie.

**Claims**

1. A multistep process for the production of cellular polyurethane moldings having a density of up to 400 g/l by thermoplastic molding of polyurethane foams at elevated temperature with compaction, which comprises

(i) producing flexible, semirigid or hard and tough polyurethane foam slabs having a density of from 15 to 40 g/l by reacting

a) at least one polyester-polyol having a functionality of from 2.3 to 6 and a hydroxyl number of from 45 to 380 based on adipic acid/diethylene glycol/glycerol, mixtures of succinic acid, glutaric acid and adipic acid/diethylene glycol/ glycerol or trimethylolpropane, adipic acid/ diethylene glycol/trimethylolpropane, adipic acid/phthalic acid/1,3-propylene glycol/trimethylolpropane, adipic acid/phthalic acid/oleic acid/trimethylolpropane and/or adipic acid/glutaric acid/succinic acid/diethylene glycol/ trimethylolpropane, with

b) mixtures of diphenylmethane diisocyanates and polyphenyl-polymethylene-polyisocyanates which are unmodified or have been modified by means of carbodiimide and/or urethane groups and have a diphenylmethane isomer content of from 40 to 85% by weight, in the presence of

c) blowing agents and

d) catalysts, and, if desired,

e) chain extenders or crosslinking agents, and

f) assistants and/or additives,

(ii) cleaving the resultant thermoplastically moldable polyurethane foam slabs to give polyurethane foam sheets having a thickness of from 2 to 200 mm, and

(iii) thermoplastically molding these sheets at from 140 to 200 °C and with compaction at a degree of compaction of from 2 to 10.

**2.** A process as claimed in claim 1, wherein the thermoplastic molding (iii) is carried out in a mold heated to from 140 to 200 ° C, and the polyurethane foam sheets are simultaneously provided with outer layers on one or both sides.

**3.** A process as claimed in claim 1 or 2, wherein the outer layers comprise thickened, curable, unsaturated polyester resin prepregs containing glass fibers and fillers.

**4.** A cellular, thermoplastic polyurethane molding having a density of up to 400 g/l, produced by a process as claimed in any of claims 1 to 3.

**5.** The use of cellular, thermoplastic polyurethane moldings produced by a process as claimed in any of claims 1 to 3, as self-supporting wall panels, headliners, engine compartment covers or dashboards in the rail vehicle, motor vehicle or aircraft industry.

**Revendications**

**1.** Procédé en plusieurs étapes pour la fabrication d'objets moulés en polyuréthannes alvéolaires de densité allant jusqu'à 400 g/l par façonnage thermoplastique de mousses de polyuréthannes à chaud avec compression, caractérisé en ce que :

(i) on prépare des blocs de mousse souples, semi-dures ou dures de polyuréthannes de densité 15 à 40 g/l par réaction de :

a) au moins un polyester-polyol de fonctionnalité 2,3 à 6 et d'indice d'hydroxyle 45 à 380, à base d'acide adipique-diéthylène-glycol-glycérol, de mélanges acide succinique-acide glutarique-acide adipique-diéthylène-glycol-glycérol ou triméthylolpropane, acide adipique-diéthylène-glycol-triméthylolpropane, acide adipique-acide phtalique-1,3-propylène-glycol-triméthylolpropane, acide adipique-acide phtalique-acide oléique-triméthylolpropane et/ou acide adipique-acide glutarique-acide succinique-diéthylène-triméthylolpropane, avec

b) des mélanges de diphénylméthane-diisocyanates et de polyphénylpolyméthylène-polyisocyanates à une teneur en isomères du diphénylméthane de 40 à 85 % en poids, éventuellement modifiés par des groupes carbodiimide et/ou uréthanne, en présence

c) des agents gonflants, et

d) des catalyseurs, et, le cas échéant

e) des agents d'allongement des chaînes ou agents réticulants, et

f) des produits auxiliaires et/ou additifs,

ii) on découpe les blocs de mousses de polyuréthannes ainsi obtenus, aptes au façonnage thermoplastique, en plaques de mousses de polyuréthannes d'une épaisseur de 2 à 200 mm, et

iii) on soumet ces plaques à façonnage thermoplastique à une température de 140 à 200 ° C sous compression à un taux de compression de 2 à 10.

**2.** Procédé selon la revendication 1, caractérisé en ce que le façonnage thermoplastique (iii) est réalisé dans un outil de moulage chauffé à une température de 140 à 200 ° C avec, simultanément, application de couches de couverture sur une face ou sur les deux faces des plaques de mousses de polyuréthannes.

**3.** Procédé selon les revendications 1 et 2, caractérisé en ce que les couches de couverture consistent en masses pré-imprégnées ("Prepregs") en résines de polyesters insaturés durcissables épaissies, contenant des fibres de verre ou des matières de charge.

**4.** Objets moulés en polyuréthannes thermoplastiques alvéolaires de densité allant jusqu'à 400 g/l fabriqués par un procédé selon l'une des revendications 1 à 3.

**5.** Utilisation des objets moulés en polyuréthannes thermoplastiques alvéolaires fabriqués par un procédé selon les revendications 1 à 3 en tant qu'habillages autoporteurs de murs, plafonds, capots moteurs ou tableaux de bord dans l'industrie des véhicules ferroviaires, routiers ou aériens.